# FASCICULE DE BREVET EUROPEEN

(11) **EP 2 567 778 B1**
(45) Date de publication et mention de la délivrance du brevet: **14.05.2014**
(21) Numéro de dépôt: 11180525.5
(22) Date de dépôt: 08.09.2011
(51) Int. Cl.: B23Q 1/70, B23Q 39/04

(54) **Procédé et système de réglage des broches d'une machine-outil multibroches**
Verfahren und System zum Einstellen von Spindeln einer Werkzeugmaschine mit mehreren Spindeln
Method and system for adjusting the spindles of a multi-spindles machine-tool

(43) Date de publication de la demande: 13.03.2013
(73) Titulaire: Tornos SA, 2740 Moutier (CH)
(72) Inventeur: Vettori, Marco, 2732 Loveresse (CH); Zannato, Joseph, 2824 Vicques (CH)
(74) Mandataire: Scheuzger, Beat Otto

(56) Documents cités:
- US-A1- 2001 018 853
- US-B1- 6 298 759

## Description

### Domaine technique de l'invention

L'invention se réfère au domaine technique des machines-outils, par exemple des machines de décolletage, de tournage ou de fraisage, et en particulier aux machines-outils à plusieurs broches, c'est-à-dire des machines multibroches, dans lesquelles plusieurs pièces peuvent être usinées simultanément par plusieurs postes d'usinage. Chaque pièce est tenue et mise en rotation par une broche, et chaque broche est indexée entre plusieurs postes d'usinage, afin d'effectuer une série de processus d'usinage sur la même pièce.

### Description de l'art antérieur

Les broches d'une machine multibroche suivent une trajectoire d'indexage prédéterminée, par exemple une trajectoire circulaire (si les broches sont montées dans un barillet rotatif, par exemple) ou linéaire (si les broches sont montées sur un chariot ou autres moyens de déplacement linéaire), mais la trajectoire peut en principe être quelconque.

L'indexage des pièces à usiner depuis un poste d'usinage à l'autre permet d'effectuer plusieurs usinages sur la même pièce sans avoir recours à un seul poste d'usinage compliqué. Le fait d'indexer les broches entre différents postes d'usinage peut néanmoins introduire des pertes de précision, dues aux incohérences de positionnement des broches relatives l'une à l'autre par rapport à la trajectoire d'indexage. C'est-à-dire que, bien que chaque usinage puisse être effectué avec une très haute précision, l'usinage total de chaque pièce, effectué par plusieurs postes d'usinage, sera d'une précision nettement moins importante à cause des incohérences mentionnées.

Pour cette raison, il est important d'assurer d'une part la macro-précision (précision du positionnement des broches dans le barillet, par exemple), et d'autre part la précision des usinages individuels. La solution conventionnelle à la macro-précision consiste à fabriquer le barillet, chariot ou autres moyens d'indexage avec une très haute précision, soigneusement réglée et contrôlée pendant la fabrication de la machine. Les fabricants de machines-outils se donnent beaucoup de peine à assurer une haute précision du positionnement des broches dans le barillet (ou autre dispositif d'indexage). Une fois fabriquée, la machine-outil accuse une précision donnée d'indexage et de positionnement des broches (macro-précision). Si l'utilisateur de la machine souhaite améliorer cette précision, il est obligé de laisser réviser la machine-outil, ou le barillet, par le fabricant. Alternativement, le logiciel de commande de la machine-outil peut être adapté pour compenser des incohérences de positionnement des broches.

Le document US 6 298 759 B1 décrit une machine-outil mutlibroche, comprenant plusieurs unités de broche. Afin d'assurer une plus grande flexibilité dans l'usinage de pièces, les unités de broche peuvent être déplacées indépendamment l'une de l'autre le long d'une trajectoire de déplacement. De cette manière, les broches ne sont pas liées à des postes d'usinage fixes, ce qui permet de disposer les outils au sein de l'espace de travail de la machine d'une manière beaucoup plus souple. Cependant, cette machine-outil ne permet pas non plus un positionnement très précis des broches.

### Brève description de l'invention

Un premier but que la présente invention vise à atteindre est de permettre, d'une façon simple et rapide, de régler le positionnement d'au moins une des broches dans une machine-outil multibroches.

À cet effet, l'invention propose un procédé de réglage de la position d'au moins une de la pluralité de broches d'un dispositif d'indexage comme décrit ci-dessus, le procédé comprenant :
une première étape d'indexage d'une première broche de la pluralité de broches, dite broche de référence, dans une première position d'usinage,
une deuxième étape de détermination de la position, dite position de référence, de l'axe principal de la broche de référence relative à la première position d'usinage,
une troisième étape d'indexage d'une deuxième broche dans la première position d'usinage, et
une quatrième étape d'actionnement d'au moins un moyen d'ajustement du dispositif d'indexage pour déplacer la position de l'axe principal de la deuxième broche vers la position de référence.

Selon une variante du procédé de l'invention, la quatrième étape comprend l'actionnement dudit au moins un moyen d'ajustement pour déplacer la position de l'axe principal de la deuxième broche selon un axe sensiblement orthogonal à ladite trajectoire prédéterminée.

Selon une autre variante du procédé de l'invention, la quatrième étape comprend l'actionnement dudit au moins un moyen d'ajustement pour déplacer la position de l'axe principal de la deuxième broche selon un axe sensiblement parallèle à ladite trajectoire prédéterminée.

Selon une autre variante de l'invention, le procédé comprend une cinquième étape, effectuée après la quatrième étape, d'actionnement d'au moins un moyen de fixation du dispositif d'indexage pour immobiliser ledit au moins un palier par rapport au dispositif d'indexage.

Selon une autre variante du procédé de l'invention, l'actionnement dudit au moins un moyen d'ajustement est effectué depuis une région frontale du dispositif d'indexage.

Selon une autre variante du procédé de l'invention, les troisième, quatrième et/ou cinquième étapes sont effectuées pour toutes les broches de la pluralité de broches sauf la broche de référence.

Le fait de permettre un réglage de précision des positions des broches par rapport au barillet (ou autre moyen d'indexage) apporte un premier avantage important en ce que la précision globale de chaque pièce usinée sur plusieurs postes d'usinage sera nettement améliorée. Un deuxième avantage est celui que la remise en précision des broches peut être réalisée rapidement et facilement sans outils spécialisés ou expertise particulière.

### Brève description des dessins

L'invention sera bien comprise à la lecture de la description ci-après faite à titre d'exemple non limitatif en regardant les dessins ci-annexés. Où les différentes figures utilisent les mêmes numéros de référence, ces numéros de référence indiquent les mêmes éléments, ou les éléments correspondants, dans les différentes figures.
La figure 1 montre une vue frontale d'un barillet multibroche d'une machine-outil utilisant les principes de la présente invention.
La figure 2 montre une vue en perspective d'une section du barillet de la figure 1.
La figure 3 montre une vue en perspective d'un détail de la partie III indiquée dans la figure 2.
La figure 4 montre une vue en perspective d'un détail de la partie IV indiquée dans la figure 3.
La figure 5 montre une vue schématique d'une section d'une des broches du barillet des figures 1 à 4.
La figure 6 montre une section d'un détail de la partie VI indiquée dans la figure 5.

### Description détaillée de l'invention

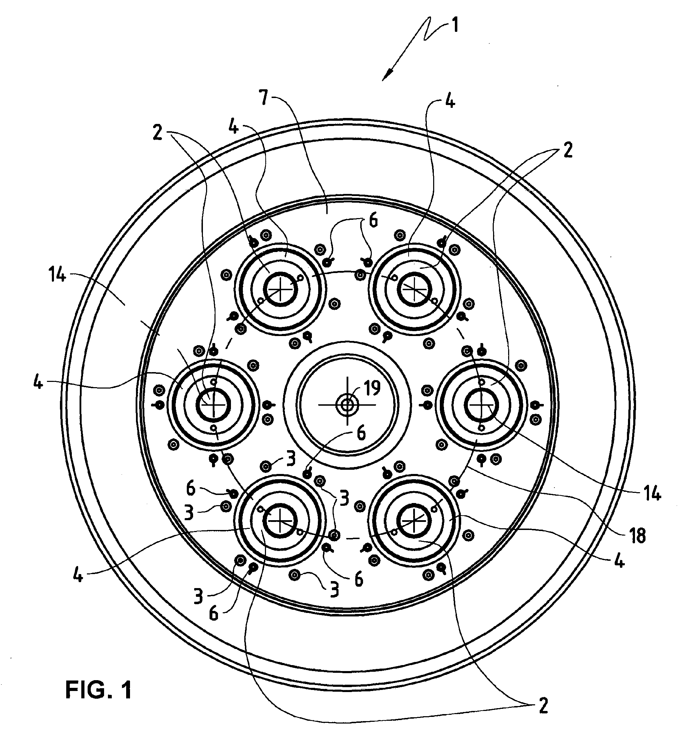

En se reportant à la figure 1, on voit un exemple d'un dispositif d'indexage 1 pouvant être utilisé pour mettre en oeuvre la présente invention. Dans l'exemple représenté, un barillet 1 supporte six broches 2, chaque broche 2 étant montée dans un palier 4. La position de chaque palier 4 est réglable par quatre excentriques 6, et chaque palier peut être immobilisé par plusieurs (six) vis de fixation 3 autour du palier 4. Le front du barillet 1, faisant face à la zone d'usinage de la machine-outil (non-illustrée) est indiqué par la référence 7. Dans cet exemple, les six broches 2 sont indexées selon une trajectoire circulaire, c'est-à-dire le cercle 18 qui traverse les six centres 14 des broches 2, le cercle étant concentrique avec le barillet 1.

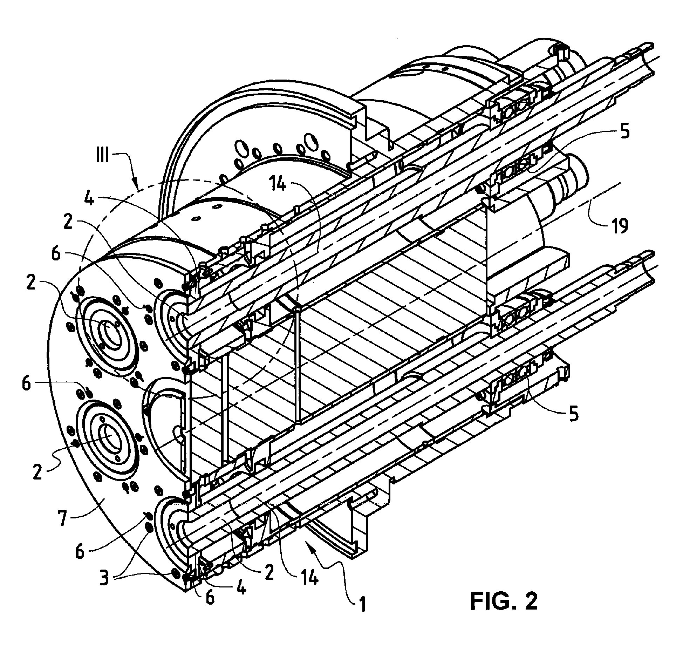

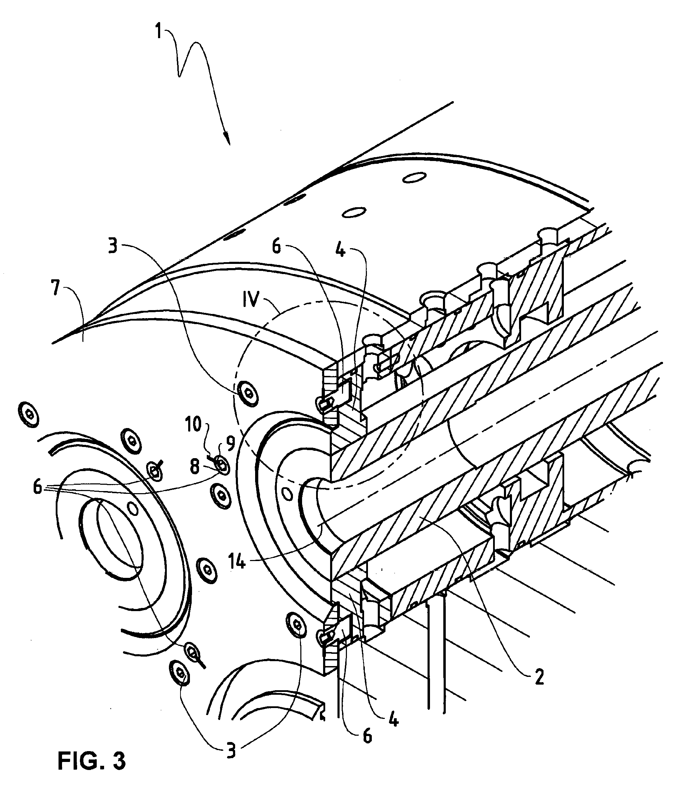

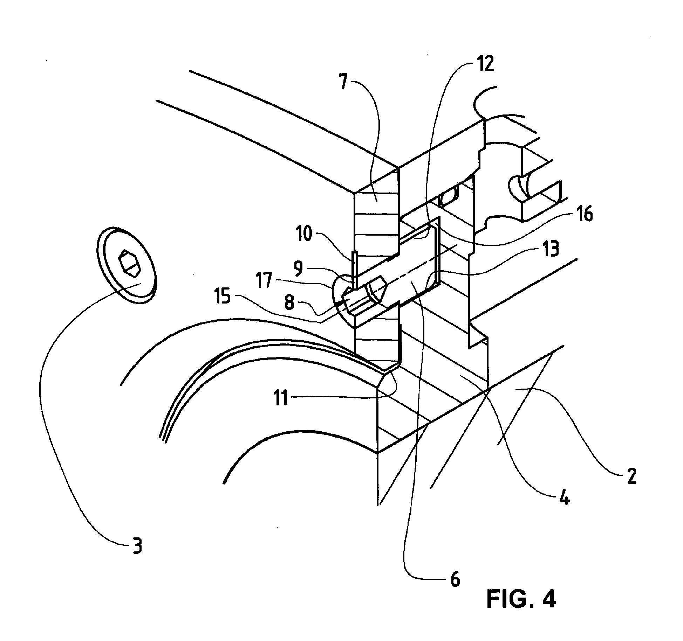

La figure 2 montre en perspective une section du même barillet 1 illustré dans la figure 1. On voit les broches 2, qui sont supportées à l'avant par des paliers 4 de façon connue, par exemple des paliers lisses, et a l'arrière par des paliers à billes 5, par exemple. La position de chaque palier 4 par rapport au corps du barillet 1 (par exemple au front 7 du barillet) est réglable au moyen des excentriques 6 et les vis de fixation 3. Le mécanisme de réglage sera mieux compris à l'aide d'un agrandissement de la partie III de la figure 2, illustrée dans la figure 3, et également d'un agrandissement de la partie IV de la figure 3, illustrée dans la figure 4.

Dans la figure 3 on voit en vue transversale une broche 2 supportée dans un palier 4, qui est également supporté dans le corps du barillet (fixé par exemple au front 7 du barillet 1 par des vis de fixation 3. La figure 4 montre comment la position du palier 4 peut être réglée au moyen des excentriques 6. II est possible de fabriquer le barillet (par exemple le front 7) et le palier 4 d'une façon précise, mais il y aura néanmoins un certain jeu, par exemple de quelques dizaines de microns, entre le palier 4 et le barillet 1 (sans ce jeu, il ne serait pas possible de monter les paliers dans le barillet). Dans la figure 4, un exemple de ce jeu est indiqué par la référence 11. Il serait en principe possible de fabriquer le barillet 1, ou au moins la partie du barillet qui support les paliers 4, de très haute précision, mais un but de la présente invention est d'éviter la nécessité des telles mesures complexes et coûteuses.

L'excentrique 6 de l'exemple illustré comprend une partie d'entraînement 17, rotatif autour d'un axe central 15, et ayant un creux pour une clé à six pans, par exemple. L'excentrique 6 et le barillet 1 sont également munis des repérages 9 et 10 de référence, qui servent à indiquer la position rotationnelle de la partie excentrique. Cette partie excentrique est indiquée par les références 12 (partie de déplacement radial maximal), et 13 (partie de déplacement radial minimal). Pendant une rotation de l'excentrique 6 dans la cavité 16 correspondante du palier, une force sera exercée entre le palier 4 et le barillet 7. Quand les vis de fixation 3 sont desserrées, cette force peut déplacer le palier 4 par rapport au barillet. Dans cet exemple, le palier 4 sera déplacé selon une direction radiale du barillet, c'est-à-dire orthogonal à la trajectoire d'indexage 18 du barillet 7. Une pluralité d'excentriques disposés autour du palier 4 (par exemple les quatre excentriques 6 illustrés dans les figures) permettent un réglage de la position du palier 4 selon deux axes orthogonaux de déplacement, dont un premier axe est sensiblement orthogonal à la trajectoire d'indexage du barillet, et dont un deuxième axe est sensiblement parallèle à la trajectoire d'indexage du barillet. Les excentriques 6 sont adaptés afin de permettre un réglage très fin, d'une précision de quelques microns, de la position du palier 4 par rapport au barillet 1, dans un plan orthogonal à l'axe principal 19 du barillet et/ou des broches 2.

Les moyens de déplacement peuvent être des excentriques, comme illustrés, ou de quelconques autres moyens permettant de déplacer les paliers 4 avec la précision requise : des moyens hydrauliques ou piézoélectriques, par exemple. Ils peuvent être disposés en paires d'éléments opposés, comme illustrés dans les figures, chaque paire comprenant un premier moyen de déplacement actionnable dans un premier sens, et un deuxième moyen de déplacement actionnable dans un deuxième sens, opposé au premier sens. Alternativement, on peut réaliser les déplacements avec seulement un premier moyen de déplacement actionnable (par un opérateur, par exemple) pour effectuer un déplacement dans le premier sens, et un moyen de réaction (à ressort, par exemple) pour effectuer un déplacement dans le deuxième sens.

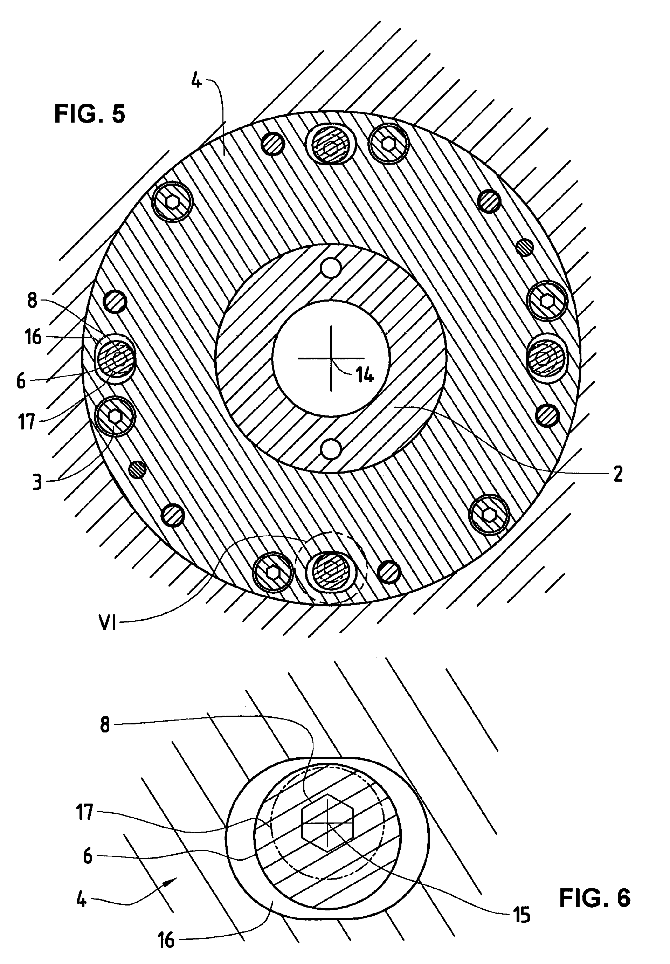

Dans la figure 5 on voit une vue transversale d'un palier 4. La figure 5 montre la broche 2, les vis de fixation 3, les quatre excentriques 6, et les cavités 16 disposées dans le palier 4 pour coopérer avec les excentriques 6. La figure 6 représente un agrandissement de la partie VI indiquée sur la figure 5, et montrant l'axe de rotation 15 de l'excentrique 6.

Le réglage des paliers 4 dans le barillet 1 de l'exemple illustré peut être réalisé comme suit :
1. Mettre toutes les broches 2 approximativement au milieu de leurs paliers/alésages 4 (tel que le jeu 11 entre chaque palier 4 et le corps 7 du barillet 1 est approximativement également distribué autour dudit chaque palier 4), à l'aide des excentriques de réglage. Cette étape peut être accomplie pour chaque broche 2 comme suit :
   1a. Débloquer les vis de fixation 3 du palier 4.
   1 b. Mesurer le déplacement possible du palier 4 en X+ et X-(orthogonal à la trajectoire d'indexage du barillet 1, par exemple)
   1c. Mettre la broche au milieu de la plage de déplacement en X, tel que X+ = X-.
   1 d. Répéter 1 b à 1 c pour la position en Y au lieu de X (c'est à dire parallèle à la trajectoire d'indexage du barillet 1, par exemple).
   1e. Bloquer les vis de fixation 3.
2. Définir la broche de référence (B_{réf} = B1), définie sur l'angle 0°, et X=Y=0. Définir la position d'usinage de référence (position actuelle de la broche de référence).
3. Indexer le barillet d'une position (avancer/reculer le barillet vers sa prochaine position d'usinage). Pour le barillet de l'exemple avec six broches, avancer/reculer d'un pas angulaire (60°).
4. Mesurer en X et Y la différence de position de la nouvelle broche (B2) qui se trouve à la position d'indexage de référence, à l'aide d'un système de mesure adéquat (par exemple un comparateur de précision).
5. Débloquer les vis de fixation 3 de la broche B2.
6. Ramener X et Y de la broche B2 à 0 en agissant sur les excentriques 6 (vérifier avec le système de mesure).
7. Bloquer les vis de fixation 3 de la broche B2.
8. Répéter les opérations 3 à 7 autant de fois que nécessaire jusqu'à ce que toutes les broches (B2 à B6 dans l'exemple) soient réglées selon la broche de référence B1.

Pour d'autres configurations de machine multibroches, avec d'autres trajectoires (linéaires, par exemple), la suite mentionnée ci-dessus à titre d'exemple peut être adaptée d'une façon appropriée.

## Revendications

1. Procédé de réglage de la position d'au moins une de la pluralité de broches (2) d'un dispositif d'indexage (1), le procédé comprenant :
une première étape d'indexage d'une première broche (2) de la pluralité de broches (2), dite broche de référence, dans une première position d'usinage,
une deuxième étape de détermination de la position, dite position de référence, de l'axe principal (14) de la broche (2) de référence relative à la première position d'usinage,
une troisième étape d'indexage d'une deuxième broche (2) dans la première position d'usinage, et
une quatrième étape d'actionnement d'au moins un moyen d'ajustement (6, 16) du dispositif d'indexage (1) pour déplacer la position de l'axe principal (14) de la deuxième broche (2) vers la position de référence.

2. Procédé selon la revendication 1, dans lequel la quatrième étape comprend l'actionnement dudit au moins un moyen d'ajustement (6, 16) pour déplacer la position de l'axe principal (14) de la deuxième broche (2) selon un axe sensiblement orthogonal à ladite trajectoire (18) prédéterminée.

3. Procédé selon l'une des revendications 1 ou 2, dans lequel la quatrième étape comprend l'actionnement dudit au moins un moyen d'ajustement (6, 16) pour déplacer la position de l'axe principal (14) de la deuxième broche (2) selon un axe sensiblement parallèle à ladite trajectoire (18) prédéterminée.

4. Procédé selon l'une des revendications 1 à 3, comprenant une cinquième étape, effectuée après la quatrième étape, d'actionnement d'au moins un moyen de fixation (3) du dispositif d'indexage (1) pour immobiliser ledit au moins un palier (4) par rapport au dispositif d'indexage (1).

5. Procédé selon l'une des revendications 1 à 4, dans lequel l'actionnement dudit au moins un moyen d'ajustement (6, 16) est effectué depuis une région frontale (7) du dispositif d'indexage (1).

6. Procédé selon l'une des revendications 1 à 5, dans lequel les troisième, quatrième et/ou cinquième étapes sont effectuées pour toutes les broches de la pluralité de broches (2) sauf la broche de référence.

## Patentansprüche

1. Verfahren zur Einstellung einer Position wenigstens einer aus einer Vielzahl von Spindeln (2) einer Indizierungsvorrichtung (1), wobei das Verfahren aufweist:
einen ersten Schritt zum Anzeigen einer ersten Spindel (2), der Referenzspindel, aus der Vielzahl von Spindeln (2) in einer ersten Arbeitsposition,
einen zweiten Schritt zur Bestimmung der Position, bezeichnet als Referenzposition, der Hauptachse (14) der Referenzspindel (2) relativ zur ersten Arbeitsposition,
einen dritten Schritt zum Anzeigen einer zweiten Spindel (2) in der ersten Arbeitsposition, und
einen vierten Schritt zur Betätigung wenigstens eines Einstellmittels (6, 16) der Indizierungsvorrichtung (1) zum Verändern der Position der Hauptachse (14) der zweiten Spindel (2) relativ zur Referenzposition.

2. Verfahren nach Anspruch 1, wobei der vierte Schritt die Betätigung des wenigstens einen Einstellmittels (6, 16) zur Veränderung der Position der Hauptachse (14) der zweiten Spindel (2) entsprechend einer Achse, die im Wesentlichen orthogonal zu dem vorbestimmten Pfad (18) verläuft, einschliesst.

3. Verfahren nach Anspruch 1 oder 2, wobei der vierte Schritt die Betätigung des wenigstens einen Einstellmittels (6, 16) zur Änderung der Position der Hauptachse (14) der zweiten Spindel (2) entsprechend einer Achse, die im Wesentlichen parallel zu dem vorbestimmten Pfad (18) verläuft, einschliesst.

4. Verfahren nach einem der Ansprüche 1 bis 3, wobei ein fünfter Schritt vorgesehen ist, der nach dem vierten Schritt ausgeführt wird, zur Betätigung wenigstens eines Feststellmittels (3) der Indizierungsvorrichtung (1), um das wenigstens eine Lager (4) in Bezug auf die Indexierungsvorrichtung (1) festzulegen.

5. Verfahren nach einem der Ansprüche 1 bis 4, wobei die Betätigung des wenigstens einen Einstellmittels (6, 16) von einem Frontbereich (7) der Indizierungsvorrichtung (1) ausgeführt wird.

6. Verfahren nach einem der Ansprüche 1 bis 5, wobei der dritte, vierte und / oder fünfte Schritt für alle Spindeln der Vielzahl von Spindeln (2) ausser der Referenzspindel ausgeführt wird.

## Claims

1. Method of adjusting the position of at least one of a plurality of spindles (2) of an indexing device (1), the method comprising :
a first step of indexing of a first spindle (2) of the plurality of spindles (2), said reference spindle, in a first machining position,
a second step of determining the position, referred to as reference position, of the main axis (14) of the reference spindle (2) relative to the first machining position,
a third step of indexing of a second spindle (2) in the first machining position, and
a fourth step of actuation of at least one adjustment means (6, 16) of the indexing device (1) for displacing the position of the main axis (14) of the second spindle (2) toward the reference position.

2. Method according to the claim 1, wherein the fourth step comprises the actuation of the said at least one adjustment means (6, 16) for displacing the position of the main axis (14) of the second spindle (2) according to an axis substantially orthogonal to the said predetermined path (18).

3. Method according to one of the claims 1 or 2, wherein the fourth step comprises the actuation of the said at least one adjustment means (6, 16) for displacing the position of the main axis (14) of the second spindle (2) according to an axis substantially parallel to the said predetermined path (18).

4. Method according to one of the claims 1 to 3, comprising a fifth step, carried out after the fourth step, of actuation of at least one fixation means (3) of the indexing device (1) for immobilising said at least one bearing (4) with respect to the indexing device (1).

5. Method according to one of the claims 1 to 4, wherein the actuation of the said at least one adjustment means (6, 16) is carried out from a frontal region (7) of the indexing device (1).

6. Method according to one of the claims 1 to 5, wherein the third, fourth and/or fifth steps are carried out for all the spindles of the plurality of spindles (2) except the reference spindle.
